# EUROPEAN PATENT APPLICATION

(11) **EP 1 471 439 A1**
(43) Date of publication of application: **27.10.2004**
(21) Application number: 02788853.6
(22) Date of filing: 17.12.2002
(51) Int. Cl.: G06F 17/27

(54) **SYNTAX ANALYSIS METHOD AND APPARATUS**

(30) Priority: 27.12.2001 JP 2001395617
(71) Applicant: National Institute of Informaion and Communications Technology, Independent Administrative Institution, Koganei-shi, Tokyo 184-0015 (JP)
(72) Inventor: UCHIMOTO, Kiyotaka, Communications Res.Laboratory, Koganei-shi, Tokyo 184-0015 (JP); ISAHARA, Hitoshi, Communications Res.Laboratory, Koganei-shi, Tokyo 184-0015 (JP)
(74) Representative: Finnie, Peter John
(86) International application number: PCT/JP2002/013186
(87) International publication number: WO 2003/056450

(57) **Abstract**

The present invention provides a high-precision syntactic structure analysis method to contribute to promotion of precise language processing technique. A monolingual document and a document translated from the monolingual document are input. If a plurality of analysis results occurs and is difficult to identify in the syntactic structure analysis in the monolingual document, such as a dependency structure analysis, a dependency structure is examined in the translation document, and an optimum dependency structure analysis is performed based on the examination result.

## Description

### Technical Field

The present invention relates to a technique for heightening precision of syntactic structure analysis in language processing and, more specifically, to a technique for heightening precision of the syntactic structure analysis by inputting a plurality of languages.

### Background Art

The development of techniques for parsing or generating a text of a language with a computer has been well in advance. A machine translation and a summarizing system, based on such techniques, are provided.

A syntactic structure analysis technique for analyzing a dependency structure in a sentence is very important in understanding a precise context, and studies have been made to develop high-precision parsing technique.

When a language ambiguous in dependency with words frequently omitted, such as Japanese language, is analyzed, a plurality of analysis results are possible. It is not rare that the analysis result becomes uncertain. A word typically has a plurality meanings, and if one language is analyzed, it is frequently uncertain what meaning the word is used at.

In a known syntactic structure analysis, a great deal of grammatical information is provided in connection with a language to be parsed in an attempt to heighten analysis precision. However, such a technique merely allows a more appropriate meaning to be selected in probability, and does not necessarily lead to a correct analysis result.

### Disclosure of Invention

It is an object of the present invention to provide high-precision syntactic structure analysis method to contribute to promotion of precise language process technique. To this end, the following parsing method and parsing apparatus are provided.

The syntactic structure analysis method of the present invention allows a higher precision syntactic structure analysis to be performed by inputting not only one language text to be parsed, as input in a known syntactic structure analysis method, but also a translation text of a language different from the original text.

More specifically, the following technique is used. An original text to be parsed and at least one translation text, at least a portion of which is translation relation to the original text, are input.

The original text and the translation text are thus parsed. All sentences are not necessarily parsed. The original text is parsed while the translation text is parsed as necessary.

If at least two pieces of syntactic structure analysis information are obtained from the original text, in other words, if the syntactic structure analysis of the original text results in a plurality of pieces of the analysis information and it is difficult to determine optimum analysis information, the syntactic structure analysis result of the translation text is used.

If a plurality of translation texts are available, information of translation text providing the most likely analysis information is used to identify an optimum result of the original text from the plurality of pieces of syntactic structure analysis information of the original text.

The identified result is output as the syntactic structure analysis result appropriate for the original text. Syntactic structure analysis that has been difficult in the conventional one language system provides a high-precision analysis result.

If the syntactic structure analysis information having at least two pieces of word meaning information is obtained from the original text, the ambiguity of word meaning is solved by acquiring the syntactic structure analysis information from the word meaning information of any translation text. Based on a fixed word meaning, syntactic structure analysis may be performed on the original text.

The syntactic structure analysis method of the present invention may be introduced in a process of generating a third language in response to the input of a plurality of languages. It is known that when a third language is generated from a given language, a more precise result is provided by the use of a plurality of languages than the use of a single language only.

The present invention provides a language processing parsing apparatus.

The parsing apparatus includes original text input means for inputting an original text to be parsed, and translation text input means for inputting a translation text, at least a portion of which is in translation relation to the original text, with a translation relation being associated therebetween.

Morphological analysis means morphologically analyzes the input original text and the input translation text.

Parsing means parses the morphologically analyzed result, by syntactically analyzing all morphemes of the original text and at least required morphemes of the translation text.

The parsing apparatus includes optimum result identification means for identifying the optimum syntactic structure analysis result of the original text by referencing the syntactic structure analysis result of the translation text if a plurality of pieces of syntactic structure analysis information is acquired from the original text or one of the plurality of pieces of syntactic structure analysis result fails to exceed a predetermined likelihood.

The parsing apparatus outputs an optimum result through syntactic structure analysis result output means.

### Brief Description of the Drawings

Fig. 1 is a flowchart for converting a monolingual document to a target language text and generating the target language document in a known technique.
Fig. 2 is a flowchart of a translation system that appropriately incorporates a parsing apparatus of the present invention.
Fig. 3 illustrates a configuration of the parsing apparatus of the present invention.

Reference numerals designate the following elements: 20a: monolingual document, 20b: translation document, 21: parsing apparatus of the present invention, 30: CPU, 31: reader, 32: external storage device, 33: ROM and RAM, 34: morphological analysis step, 35: dependency analysis step, 36: case analysis step, 37: translation document searching step, and 38: translation document dependency structure analysis step.

### Best Mode for Carrying Out the Invention

The embodiments of the present invention will now be discussed with reference to the drawings.

The present invention provides a technique to perform a syntactic structure analysis at a precise level that is considered difficult using a conventional syntactic structure analysis technique. More specifically, the present invention provides an extremely high-precision syntactic structure analysis technique using a plurality of high-precision languages translated by human beings, for example, Japanese language and English language.

In one application example, the present invention is incorporated in a translation system, in which an original language document to be parsed and a language document translated from the original language are input to generate a target language.

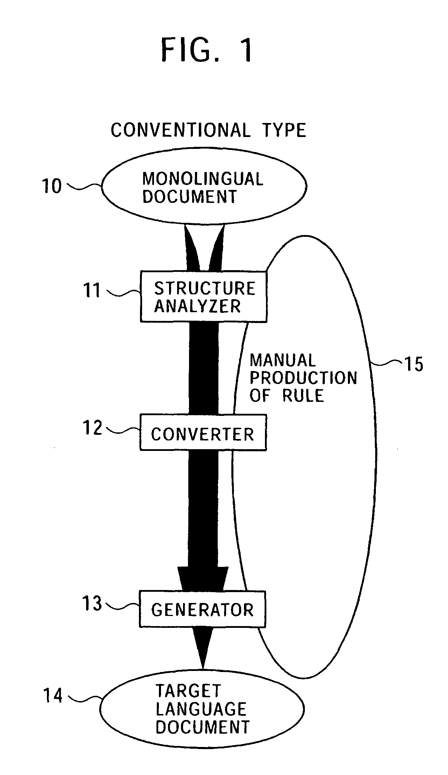

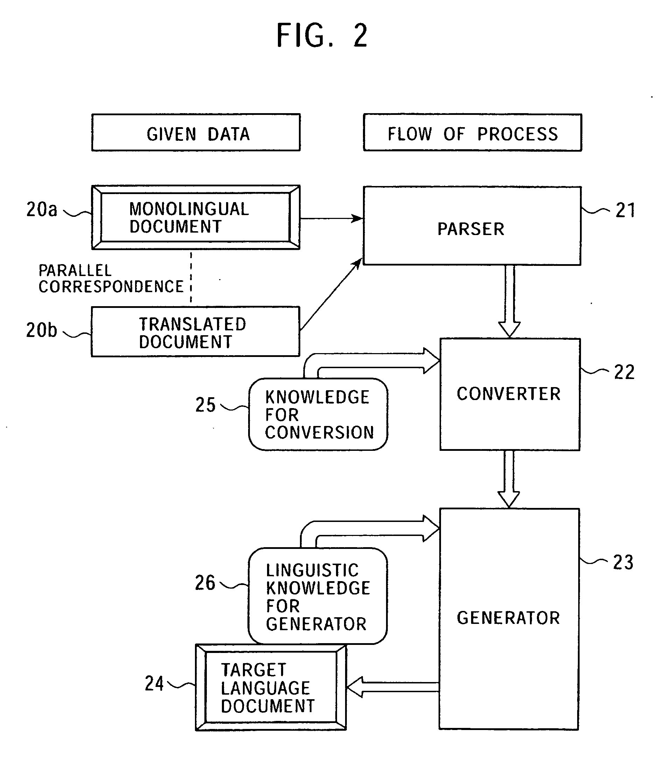

Fig. 1 is a flowchart for converting a monolingual document to a target language text and generating the target language document in a known technique. Fig. 2 is a flowchart of converting Japanese language and English language to a target language to generate the target language in accordance with the present invention.

A known translation process of translating a monolingual document (10) to a target language document (14) is typically performed by a syntax analyzer (11), a converter (12), and a generator (13) as major elements. The development of the syntax analyzer (11), the converter (12) and the generator (13) essentially requires a manual production of rule (15). A great deal of document must be analyzed to develop a high-precision system. For example, large costs and a vast amount of studies are required to develop a large scale corpus for use in learning. Such corpuses are currently being produced for major languages, but hopes are low that corpuses are produced for non-major languages.

Fig. 2 illustrates a translation system that precisely translates to a target language using a monolingual document (20a), one of the major language with the corpus thereof organized, and a translation language document (20b) that is a parallel correspondence of the monolingual document (20a).

In the system, input means (not shown) for inputting at least two translation texts inputs documents. The translation texts in each of the languages or in any combination of the languages thus reach a parser (21) of the present invention as analyzing means for analyzing language information.

The parsing apparatus includes a converter (22) as converting means for converting the language to a third language in response to an analysis result of the parser (21), and a generator (23) as generating means for generating a text of the third language in response to the conversion result of a converting step. The converter (22) and the generator (23) contain knowledge (25) for conversion and linguistic knowledge (26) for generator, respectively.

Finally, the generator (23) outputs the target language document (24).

Input language documents are a Japanese language document and an English language document with one translated from the other. In this case, one document may be a full or a partial translation of the other entire document. The number of input languages is at least two, and a high-precision syntactic structure analysis is performed on a third language.

A combination of translation languages in the present invention may be Japanese language and English language, or Japanese language and Chinese language, or a third language therefrom. The use of languages in different language families is preferable. For example, if English language and French language are used, the effectiveness of the present invention is not so large. However, if English language, French language, and Japanese language are combined, higher precision analysis is expected than in a combination of English language and Japanese language only. Such a combination is preferable.

The parser (21) of the present invention will now be discussed in detail.

The system analyzes a dependency structure (modification relation) between words (or bunsetu or phrase in Japanese language being a larger unit than word) in response to two documents in Japanese language and English language (20a)(20b) with one translated from the other. The dependency structure may be determined by applying, to another language, a dependency model in Japanese language proposed by the applicant of this application ("kouhou bunmyaku wo kouryoshita kakariuke model" (Dependency Model Using Posterior Context), authored by K. Uchimoto, M. Murata, S. Sekine, and H. Isahara, Journal of Natural Language Processing Volume 7, No. 5, pp.3-17 (2000)).

That model is used to learn whether two words (or bunsetu) are dependent on each other, and is implemented using a machine learning model. The dependency structure is determined so that the product of probabilities of one entire sentence calculated in a learned model is maximized.

A case analysis (semantic analysis) is performed on the dependency structure structure. In the processing of dependency structure, the effectiveness of the two translation languages is measurable as the correct answer rate of dependency in the dependency structure increases.

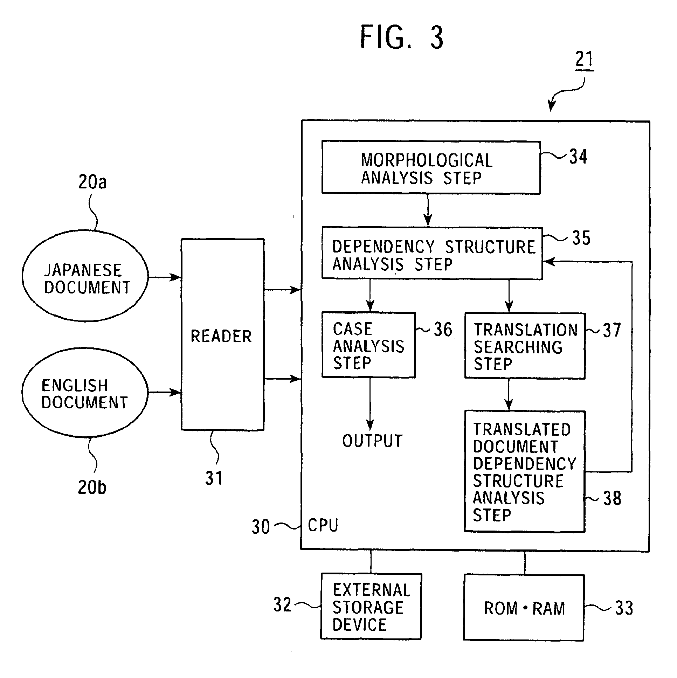

Fig. 3 illustrates a configuration of the parsing apparatus of the present invention. The apparatus (21) includes a CPU (30), a reader (31), an external storage unit (32), and an ROM and RAM unit (33), and the ROM and RAM unit (33) stores, as necessary, the process performed by the CPU (30).

The result of the syntactic structure analysis is output to the ROM and RAM unit (33) for storage, and is then subjected to the process of the converter (22).

In a morphological analysis step (34), the CPU (30) morphologically analyzes an input monolingual document (here, a Japanese language document) (20a) and a translation language document (here, an English language document) (20b). In the morphological analysis, part of speech, etc. may be imparted referencing a morphological analysis dictionary stored in the external storage unit (32).

The dependency structure between words in the Japanese language document (20a) is analyzed based on the result of the morphological analysis. (Dependency relation analysis step 35).

If the dependency structure analysis step 35 results in one analysis result, or if the analysis result shows a likelihood equal to or higher than a predetermined threshold in the machine learning, the case analysis is performed in a case analysis step (36). The result of the case analysis step (36) is stored in the external storage unit (32).

Generally speaking, it is difficult to determine a precise dependency structure in response to the mere input of the monolingual document. In the dependency structure analysis step (35), particularly important information is word order. For example, if a Japanese sentence "watashi wa (I) shojo (girl) to inu (dog) wo mita (saw)." may be interpreted as stating "'watashi' ga 'shojo to inu wo mita' " (I saw a girl and a dog.) or "'watashi' ga 'shojo' to tomoni 'inu wo mita' " (I and a girl saw a dog).

In accordance with the present invention, a translation portion of the English document is analyzed to determine which analysis result is correct.

If a plurality of analysis results are obtained in the dependency structure analysis step (35), and it is impossible to determine which analysis result is appropriate, the algorithm proceeds to a translation searching step (37) to search for a portion of the English document (20b) corresponding to the sentence in question of the Japanese document (20a).

In the translation searching step (37), a known language processing technique for extracting a mutual relationship between two texts may be used. For example, a translation sentence association apparatus disclosed in Japanese Patent 3311567 may be used.

When the translation sentence is found in the search, a dependency structure in the sentence is analyzed. (Translation document dependency structure analysis step (38))

Referring to a translation sentence found in the search "I saw a girl and a dog." in the above example, the former interpretation "'watashi' ga 'shojo to inu wo mita' " is easily determined to be appropriate. In the case of the latter analysis result "'watashi' ga 'shojo' to tomoni 'inu wo mita'", the corresponding translation sentence must be in the order "I and a girl saw a dog", which fails to be consistent with the sentence found in the search.

The precise dependency structure analysis, which has been conventionally difficult, is now possible by feeding back the information concerning the dependency structure in the translation document to the dependency structure analysis step (35).

Japanese sentences are substantially different from English sentences in word order, and English grammatical restrictions on word order are strict. A modification destination, which is ambiguous in Japanese sentences, is clarified in English, and vice versa.

In the case of the translation sentence "I saw a girl and a dog./watashi wa shojo to inu wo mita." in the above example, the phrase "and a dog" is clearly dependent on the word "saw" in English. However, in the Japanese sentence, it is ambiguous as to whether "shojo to" modifies "inu wo" as a parallel phrase thereof or "mita".

Conversely, in the case of a translation sentence is "I saw a girl with a telescope./ watashi wa bouenkyou de shojo wo mita.", the English sentence is ambiguous as to whether "with a telescope" is dependent on "saw" or "a girl". In the Japanese sentence, analysis easily concludes that "bouenkyou de" modifies "mita".

The latter example shows that the input of a Japanese translation document is effective when an English document is input as a monolingual document.

In addition to word order, grammatical information may be effectively used. For example, the grammatical information includes article, singular or plural forms of a noun, conjugation information of a verb including gerund and infinitive in English language, and information of a postpositional word in Japanese language.

For example, a Japanese language sentence "kare (he) wa hon wo kaki (write), shuppanshiteiru (publish) hito (people) wo sonkeishiteiru (respect)." is ambiguous as to whether "'hon wo' kaiteiru" (people who write a book) is "kare" (he) or "shuppanshiteiru hito" (people who publish).

If a translation sentence "He respects people who write books and publish them." is input, it is grammatically clear that verbs after "who" are dependent on "people" (because the verbs do not end with "s" that is used in the third-person, present-tense, singular forms thereof). An analysis thus correctly shows that "hon wo kaiteiru" (people who write books) is "shuppanshiteiru hito" (people who publish).

Information as to whether there is an omitted word is also used. In Japanese language documents, a subject is frequently omitted (zero pronouns are frequently used). In English documents, a subject is essential in many cases, and an ambiguous portion with a subject omitted is compensated for by English document.

This technique is effective when a subject must be identified using a case analysis.

For example, Japanese sentences reading "tomodachi (friend) to resutoran (restaurant) e ikimashita (went). yumeijin (celebrity) ni aete (met) rakii (lucky) deshita." are ambiguous as to who is lucky, I or the friend, or both. The Japanese sentences are also ambiguous as to whether a single celebrity or a plurality of celebrities were there. An English translation of the Japanese sentences "I went to the restaurant with my friend. We were lucky because we met a celebrity." clearly conveys that both were lucky and that they met one celebrity.

The ambiguity of a word meaning may be solved in a translation, and the ambiguity in the syntactic dependency may be solved. An English sentence as an original language, and a Japanese language as a translation may be input.

For example, an English sentence reading "He saw a girl laughing at the second story." is unclear. The sentence could have three meanings, i.e., "He saw a girl listening to and then laughing at the second story.", "At the second floor, he saw a laughing girl.", "He saw a girl who was laughing at the second floor." In other words, the English sentence is ambiguous as to whether "at the book store" is dependent on "laughing" or "saw".

A Japanese translation reading "kare wa nibanme no hanashi wo kiite waratteiru shojo wo mita." clearly conveys that story means "tale" rather than "floor", and analysis correctly concludes that "story" is dependent on "laughing".

From the foregoing discussion, the information of the translation contributes to not only syntactic structure analysis but also the solution to word meaning ambiguity. The ambiguity of word meaning of the English word "bank" is considered.

The English word "bank" is ambiguous with two meanings "ginko (a business organization)" and "dote (land along the side of river)" while Japanese "ginko" and "dote" have two different meanings. Such ambiguity is easily solved by examining which word is used as the word "bank" in the Japanese sentence.

The clarification of the ambiguity of word meaning using the translation language easily determines the modification destination, thereby contributing to a precise syntactic structure analysis. Based on the fixed word meaning, the syntactic structure analysis, namely, the dependency structure analysis step (35) is performed. If the dependency structure analysis step 35 results in one analysis result, or if the analysis result shows a likelihood equal to or higher than a predetermined threshold in the machine learning, the algorithm proceeds to the case analysis step (36).

The present invention provides a novel parsing apparatus that performs an extremely precise syntactic structure analysis by inputting the translation document in addition to the known technique of syntactic structure analysis of the monolingual document.

In particular, when one language having mild word order, and another language strict word order are available, a word order of a strict word order language document is analyzed. If a plurality of analysis results are obtained in the mild word order language, an analysis result recognized in the strict word order language may be adopted in the course of analysis. Syntactic structure analysis is thus easily and precisely performed.

The present invention thus constructed provides the following advantages.

One of claims 1 through 4 provides a high-precision syntactic structure analysis method to identify a syntactic structure analysis result from among a plurality of syntactic structure analysis results. It should be noted that identifying one from a plurality of analysis results has been conventionally difficult.

If a sentence in one language such as Japanese language is open to several interpretations because of the mild word order rule thereof, a known technique performs a likely interpretation based on a vast amount of accumulated knowledge. However, in accordance with the present invention, an appropriate interpretation is made by inputting a language having strict word order rule as a translation.

The present invention allows the grammatical information other than word order to be effectively used. When a subject in Japanese language is ambiguous, the subject is correctly identified from a singular or plural English form. Analysis precision is thus heightened.

The information concerning a word omission may be used. When a subject must be identified using the case analysis in a Japanese language sentence, a conventional single language analysis alone cannot predict the subject. In accordance with the present invention, the subject is exactly identified by referencing the English sentence. Analysis precision is thus heightened.

It is not rare that a single word has a plurality of word meanings in one language. In the conventional syntactic structure analysis method, an erroneous analysis is sometimes performed based on an erroneous word meaning recognition. The present invention identifies an exact word meaning from a translation, and syntactic structure analysis precision level is heightened.

The above method permits a precise syntactic structure analysis by simply using translation texts often already in presence, and is much more easier than selecting an optimum analysis result through the intervention of human being in the course of the syntactic structure analysis. The above method thus satisfies the requirements for the automation of the syntactic structure analysis and language processing.

The parsing apparatus of one of claims 5 through 7 automatically performs the syntactic structure analysis including the morphological analysis, the dependency structure analysis, the case analysis, etc., in response to the input of at least two languages in translation relation to each other. For example, if a dependency structure is unknown, documents in translation relation to each other are analyzed. An appropriate dependency structure is thus determined from the result. The present invention thus provides a high-precision parsing apparatus that can be substituted for the conventional parsing apparatus.

The present invention may be advantageously implemented in a translation system that generates a third language, by inputting a plurality of languages in translation relation to each other.

## Claims

1. A parsing method for language processing, comprising:
inputting an original text to be parsed, and at least one text, at least a portion of which is in translation relation to the original text,
parsing the original text and the translation text,
identifying optimum syntactic structure analysis information of the original text from the syntactic structure analysis information of any of the translation texts based on the syntactic structure analysis information of the translation text if at least two pieces of syntactic structure analysis information are acquired from the original text, and
outputting the identified syntactic structure analysis information as the syntactic structure analysis result of the original text.

2. A parsing method according to claim 1, wherein if at least two pieces of syntactic structure analysis information are acquired from the original text,
acquiring the syntactic structure analysis information based on at least one of word order information, grammatical information, information regarding the presence or absence of an omission, word meaning information in any of the translation texts, and identifying the optimum syntactic structure analysis information of the original text from the syntactic structure analysis information of the translation text.

3. A parsing method according to one of claims 1 and 2, wherein if at least two pieces of syntactic structure analysis information are acquired from the original text,
solving the ambiguity of the meaning of a word by acquiring the syntactic structure analysis information based the word meaning information of any translation text, and parsing the original text again based on the fixed word meaning.

4. A parsing method according to any of claim 1 to 3, which is applied for the process of generating a third language by a plurality of linguistic texts.

5. A parsing apparatus for language processing, comprising:
original text input means for inputting an original text to be parsed,
translation text input means for inputting a translation text, at least a portion of which is in translation relation to the original text, with translation relation being associated therebetween,
morphological analysis means for morphologically analyzing the input original text and the input translation text,
parsing means for parsing the morphologically analyzed result,
optimum result identification means for identifying optimum syntactic structure analysis result of the original text by referencing the syntactic structure analysis result of the translation text if a plurality of pieces of syntactic structure analysis information is acquired from the original text or one of the plurality of pieces of syntactic structure analysis result fails to exceed a predetermined likelihood, and
syntactic structure analysis result output means for outputting the optimum result.

6. A parsing apparatus according to claim 5, wherein if at least two pieces of syntactic structure analysis information are obtained from the original text,
the optimum result identification means acquires the syntactic structure analysis information based on at least one of word order information, grammatical information, information regarding the presence or absence of an omission, word meaning information in any of the translation text, and identifies the optimum syntactic structure analysis information of the original text from the syntactic structure analysis information of the translation text.

7. A parsing apparatus according to claim 5 or claim 6, which is supplied with a device for generating a third language by a plurality of linguistic texts.
